# FASCICULE DE BREVET EUROPEEN

(11) **EP 1 794 019 B1**
(45) Date de publication et mention de la délivrance du brevet: **26.03.2008**
(21) Numéro de dépôt: 05797555.9
(22) Date de dépôt: 04.08.2005
(51) Int. Cl.: B60K 13/04

(54) **MAINTIEN DE CATALYSEUR PAR SANGLE SUR CARTER CYLINDRES**
BANDSYSTEM ZUM BEFESTIGEN EINES KATALYSATORS AN EIN ZYLINDERGEHÄUSE
STRAP SYSTEM FOR FIXING A CATALYST TO A CYLINDER CASE

(30) Priorité: 24.09.2004 FR 0452151
(43) Date de publication de la demande: 13.06.2007
(73) Titulaire: RENAULT S.A.S., 92100 Boulogne Billancourt (FR)
(72) Inventeur: DUMAS, Eric, F-78800 HOUILLES (FR)
(74) Mandataire: Guyon, Rodolphe C.
(86) Numéro de dépôt international: PCT/FR2005/050651
(87) Numéro de publication internationale: WO 2006/032801

(56) Documents cités:
- FR-A- 2 837 881
- GB-A- 2 212 771
- US-A- 2 912 198

## Description

La présente invention concerne les dispositifs de fixation d'un catalyseur, et plus particulièrement les dispositifs de fixation d'un catalyseur sur une partie rigide d'un moteur à combustion interne.

Le catalyseur est disposé au sein de la ligne d'échappement d'un moteur à combustion interne. II présente en général une forme globalement cylindrique contenant au moins un support monolithique pour le traitement des gaz d'échappement. Il se trouve généralement en aval du collecteur d'échappement ou en aval du turbocompresseur dans le cas d'un moteur à combustion interne suralimenté. En raison du poids croissant des catalyseurs, de leur encombrement, les solutions actuelles utilisent des dispositifs de fixation par sangles de serrage, les dispositifs étant raccordés au bloc-cylindres et maintenant le catalyseur à proximité de ce bloc-cylindres. De tels dispositifs restent insuffisants, car la tenue vibratoire est limitée.

L'invention vise à pallier les inconvénients de l'état de la technique. Dans ce but elle fournit un dispositif de fixation d'un catalyseur de forme sensiblement cylindrique sur une partie rigide d'un moteur à combustion interne, le dispositif comportant au moins une sangle de serrage entourant le catalyseur et le maintenant sur la partie rigide par l'intermédiaire d'au moins une paire de points d'appui agencés en Vé de part et d'autre d'un plan axial du catalyseur, des moyens de fixation d'au moins un tronçon de la sangle et des moyens de serrage de la sangle, les points d'appui étant indépendants et portés par la partie rigide, et un tronçon de la sangle étant fixé directement sur la partie rigide.

Selon d'autres caractéristiques de l'invention:
- le point de fixation du tronçon de la sangle peut être disposé dans ledit plan axial entre les points d'appui,
- le dispositif peut comporter au moins deux sangles décalées axialement, le point de fixation du tronçon de chaque sangle étant disposé dans ledit plan axial entre une paire de points d'appui, chaque paire de points d'appui étant située dans le plan de la sangle 5 correspondante,
- les points d'appui peuvent être réalisés en une seule pièce avec la partie rigide,

Selon un autre mode de réalisation de l'invention :
- un point d'appui peut comporter un support d'appui fixé en un même point de la partie rigide,
- le tronçon de la sangle et le support d'appui peuvent être fixés en un même point de la partie rigide,
- chaque point d'appui peut comporter un support d'appui fixé sur la partie rigide,
- le dispositif peut comporter deux sangles décalées axialement dont les tronçons d'extrémités sont fixés sur la partie rigide et peut comporter un support d'appui s'étendant longitudinalement entre deux points de fixation des sangles,
- chaque support d'appui peut être constitué d'une patte en tôle pliée comportant une branche radiale et une branche tangentielle interposée entre l'extrémité libre de la branche radiale et la portion en vis-à-vis de la surface externe du catalyseur,
- les points d'appui peuvent être réalisés en une seule pièce avec la partie rigide.

La présente invention et ses avantages seront mieux compris à la lecture de la description détaillée de modes de réalisation pris à titre d'exemple et nullement limitatifs, et illustrés par les dessins annexés sur lesquels :
- la figure 1 est une vue de face d'un premier mode de réalisation d'un dispositif de fixation selon l'invention,
- la figure 2 est une vue en perspective du premier mode de réalisation sans le catalyseur,
- la figure 3 est une vue de face d'un deuxième mode de réalisation d'un dispositif de fixation selon l'invention
- la figure 4 est une vue en perspective du deuxième mode de réalisation sans le catalyseur,
- la figure 5 est une perspective d'une variante du deuxième mode de réalisation sans le catalyseur.

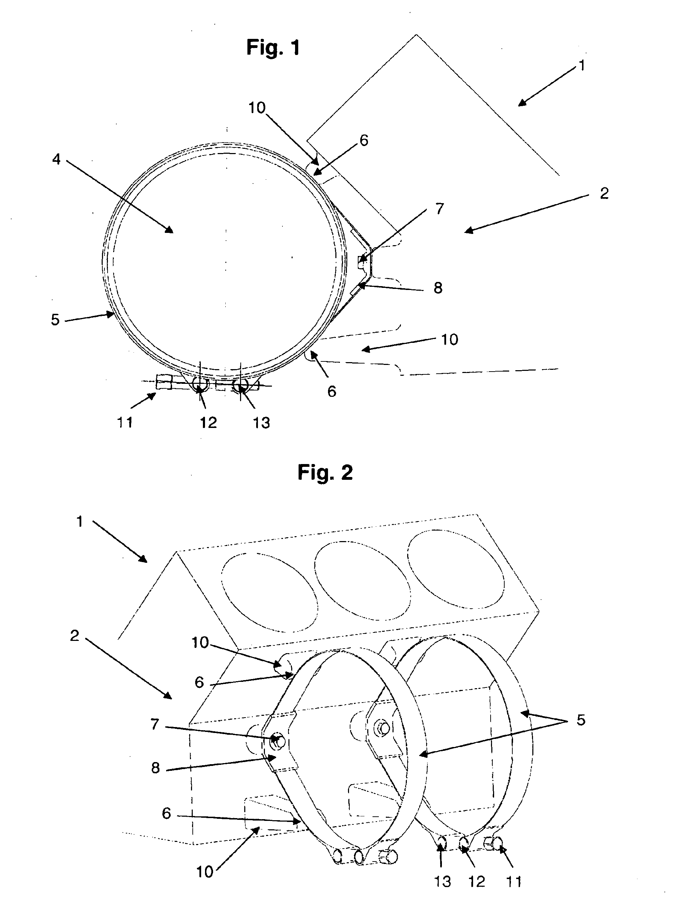

Sur les figures 1 et 2 est représenté une partie d'un moteur à combustion interne 1, du type moteur à combustion interne à architecture en Vé. Un catalyseur 4 est fixé sur le côté du moteur 1 par l'intermédiaire d'un dispositif de fixation. Le dispositif de fixation comporte au moins une sangle 5 de serrage entourant le catalyseur 4 et le maintenant en appui contre la partie rigide du moteur 1. Par partie rigide, il convient d'entendre un bloc-cylindres 2, une culasse non représenté, ou encore un ensemble formé d'une culasse et d'un bloc-cylindres 2. La sangle 5 de serrage maintient le catalyseur 4 sur la partie rigide du moteur 1 par l'intermédiaire d'au moins une paire de points d'appui 6 agencés en Vé de part et d'autre d'un plan axial du catalyseur 4. Selon l'invention, ces points d'appui 6 sont indépendants. Dans ce mode de réalisation, les points d'appui 6 sont réalisé en une seule pièce avec la partie rigide, les deux points d'appui 6 étant disposé de part et d'autre d'un plan axial du catalyseur 4. Dans ce mode de réalisation, le dispositif utilise deux paires de points d'appui 6.

Le dispositif de fixation comporte également des moyens de fixation d'au moins un tronçon de la sangle 5 de serrage. Selon l'invention, le tronçon de la sangle 5 est fixé directement sur la partie rigide, c'est-à-dire qu'il n'y a pas de pièces intermédiaires entre le tronçon de la sangle 5 et la partie rigide, et que ce tronçon est directement au contact de celle-ci. Ces moyens de fixations sont constitués d'une vis 7 de fixation et d'un élément 8 de mise en forme du tronçon de la sangle 5.

Le point de fixation du tronçon de la sangle 5 se trouve dans ledit plan axial entre les points d'appui 6.

Le tronçon est percé pour recevoir la vis 7. La vis 7 se loge dans un trou taraudé réalisé dans la partie rigide du moteur 1. Comme illustré à la figure 1, le trou taraudé peut être réalisé dans un bossage 10 du bloc-cylindres 2.

Le dispositif de fixation comporte également des moyens de serrage de la sangle 5. Dans cet exemple non limitatif, ces moyens de serrage comportent au moins une vis tangente 11 traversant un axe 12 et un écrou 13 montés chacun sur une extrémité de la sangle 5 de serrage.

Le dispositif de fixation du catalyseur 1 peut utiliser deux sangles 5 de serrage, ces sangles étant décalées axialement. Pour chacune de ces sangles 5 de serrage, le point de fixation du tronçon est disposé dans ledit plan axial entre une paire de points d'appui 6, chaque paire de points d'appui 6 étant disposée dans le plan de la sangle 5 correspondante.

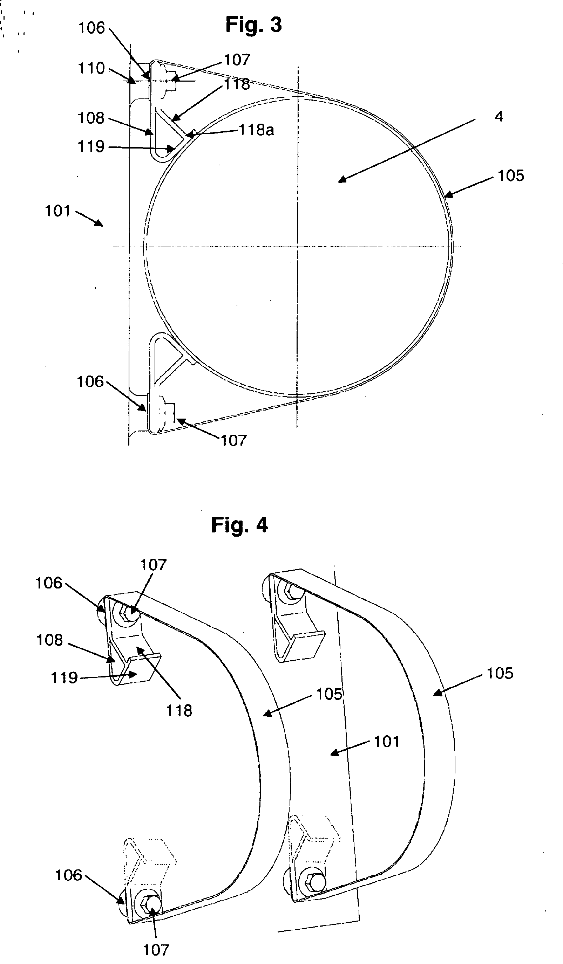

Un deuxième mode de réalisation est représenté aux figures 3 et 4. Les figures 3 et 4 représentent schématiquement une partie rigide d'un moteur à combustion interne 101. Un catalyseur 4 est fixé sur le côté du moteur 101, par l'intermédiaire d'un dispositif de fixation. Le dispositif de fixation comporte au moins une sangle 105 de serrage entourant le catalyseur 4 et le maintenant en appui contre la partie rigide du moteur 101. Par partie rigide, il convient d'entendre un bloc-cylindres, une culasse, ou encore un ensemble formé d'une culasse et d'un bloc-cylindres. La sangle 105 de serrage maintient le catalyseur 4 sur la partie rigide du moteur 101 par l'intermédiaire d'au moins une paire de points d'appui 106 agencés en Vé de part et d'autre d'un plan axial du catalyseur 4. Selon l'invention, ces points d'appui 106 sont indépendants. Dans ce mode de réalisation, les points d'appui 106 sont réalisés en une seule pièce avec la partie rigide, les deux points d'appui 106 étant disposés de part et d'autre d'un plan axial du catalyseur 4. Dans ce mode de réalisation, le dispositif utilise deux paires de points d'appui 106.

Le dispositif de fixation comporte également des moyens de fixation d'au moins un tronçon de la sangle 105 de serrage. Selon l'invention, le tronçon de la sangle 105 est fixé directement sur la partie rigide du moteur 101, c'est-à-dire qu'il n'y a pas de pièces intermédiaires entre le tronçon de la sangle 105 et la partie rigide, et que ce tronçon est directement au contact de celle-ci.

Dans ce deuxième mode de réalisation, chaque point d'appui 106 peut comporter un support d'appui 108 fixé en un même point de la partie rigide du moteur 101. De même, le tronçon de la sangle 105, par exemple un tronçon d'extrémité, et le support d'appui 108 sont fixés en un même point de la partie rigide du moteur 101.

Ces moyens de fixations de chaque tronçon sont constitués d'une vis 107 de fixation et du support d'appui 108.

Le tronçon de la sangle 105 est percé pour recevoir la vis 107. La vis 107 se loge dans un trou taraudé 109 réalisé dans la partie rigide du moteur 101. Comme illustré à la figure 1, le trou taraudé 109 peut être réalisé dans un bossage 110 de la partie rigide du moteur 101.

Le dispositif de fixation comporte également des moyens de serrage de la sangle 105. Dans cet exemple non limitatif, ces moyens de serrage sont constitués par les vis 107 de fixation. On peut aussi utiliser les moyens de serrage décrits dans le premier mode de réalisation, qui sont constitués d'une vis tangente traversant un axe et un écrou.

Le dispositif de fixation du catalyseur 101 peut utiliser deux sangles 105 de serrage, ces sangles étant décalées axialement, chaque paire de points d'appui 106 étant disposée dans le plan de la sangle 105 correspondante.

Chaque support d'appui 108 est constitué d'une patte en tôle pliée qui comporte une branche radiale 118 et une branche tangentielle 119 interposée entre l'extrémité libre 118a de la branche radiale et une portion en vis-à-vis de la surface externe du catalyseur 4.

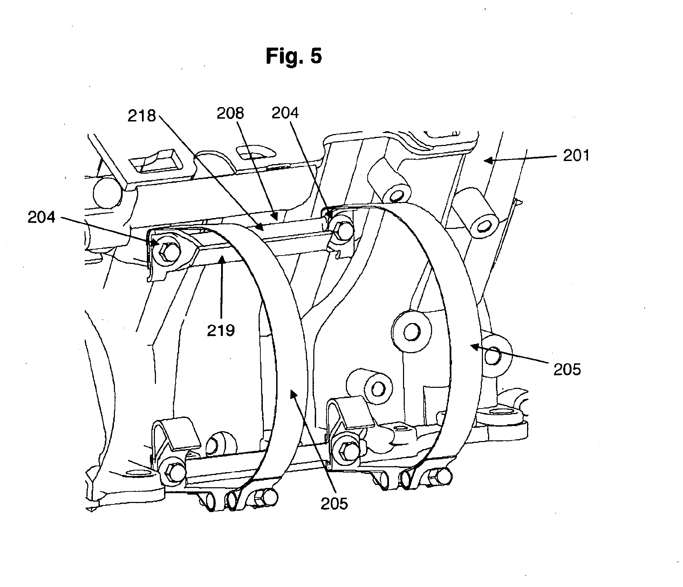

Selon une variante de réalisation du deuxième mode de réalisation illustré à la figure 5, le dispositif de fixation comporte deux sangles 205 décalées axialement dont les tronçons d'extrémités sont fixés sur la partie rigide du moteur 201. Dans cette variante, le dispositif de fixation comporte un support d'appui 208 qui s'étend longitudinalement entre deux points de fixation 204 des sangles 205. Le support d'appui 208 est constitué d'une patte en tôle pliée qui comporte une branche radiale 218 et une branche tangentielle 219 interposée entre l'extrémité libre de la branche radiale et la portion en vis-à-vis de la surface externe du catalyseur non représenté.

## Revendications

1. Dispositif de fixation d'un catalyseur (4) de forme sensiblement cylindrique sur une partie rigide d'un moteur à combustion interne (1;101;201), le dispositif comportant au moins une sangle de serrage (5;105;205) entourant le catalyseur (4) et le maintenant sur la partie rigide par l'intermédiaire d'au moins une paire de points d'appui (6;106) agencés en Vé de part et d'autre d'un plan axial du catalyseur (4), des moyens de fixation (78) d'au moins un tronçon de la sangle (5;105;205) sur la partie rigide et des moyens de serrage (11, 12, 13) de la sangle (5;105;205), **caractérise en ce que** les points d'appui (6:106) sont indépendants et portés par la partie rigide, et **en ce que** le tronçon de la sangle (5;105;205) est fixé directement sur la partie rigide.

2. Dispositif de fixation d'un catalyseur selon la revendication 1, **caractérisé en ce que** le point de fixation du tronçon de la sangle (5) est disposé dans ledit plan axial entre les points d'appui (6).

3. Dispositif de fixation d'un catalyseur selon la revendication 2, **caractérisé en ce qu'**il comporte au moins deux sangles (5) décalées axialement, le point de fixation du tronçon de chaque sangle (5) étant disposé dans ledit plan axial entre une paire de points d'appui (6), chaque paire de points d'appui (6) étant située dans le plan de la sangle (5) correspondante.

4. Dispositif de fixation d'un catalyseur selon l'une quelconque des revendications 1 à 3, **caractérisé en ce que** les points d'appui (6) sont réalisés en une seule pièce avec la partie rigide.

5. Dispositif de fixation d'un catalyseur selon la revendication 1, **caractérisé en ce qu'**un point d'appui (106) comporte un support d'appui (108) fixé en un même point de la partie rigide.

6. Dispositif de fixation d'un catalyseur selon la revendication 5, **caractérisé en ce que** le tronçon de la sangle (105,205) et le support d'appui (108;208) sont fixés en un même point de la partie rigide.

7. Dispositif de fixation d'un catalyseur selon la revendication 6, **caractérisé en ce que** chaque point d'appui (106) comporte un support d'appui (108;208) fixé sur la partie rigide.

8. Dispositif de fixation selon la revendication 5, 6 ou 7, **caractérisé en ce qu'**il comporte deux sangles (205) décalées axialement dont les tronçons d'extrémités sont fixés sur la partie rigide et **en ce qu'**il comporte un support d'appui (208) s'étendant longitudinalement entre deux points de fixation (204) des sangles (205).

9. Dispositif de fixation selon l'une quelconque des revendications 5 à 8, **caractérisé en ce que** chaque support d'appui (108;208) est constitué d'une patte en tôle pliée comportant une branche radiale (118;218) et une branche tangentielle (119;219) interposée entre l'extrémité libre (118a) de la branche radiale (118;218) et la portion en vis-à-vis de la surface externe du catalyseur (4).

10. Dispositif de fixation selon l'une quelconque des revendications 5 à 9, **caractérisé en ce que** les points d'appui (106) sont réalisés en une seule pièce avec la partie rigide.

## Claims

1. Device for fixing a catalytic converter (4) of substantially cylindrical shape to a rigid part of an internal combustion engine (1; 101; 201), the device having at least one securing strap (5; 105; 205) surrounding the catalytic converter (4) and holding it on the rigid part by means of at least one pair of bearing points (6; 106) arranged in a V formation, one on each side of an axial plane of the catalytic converter (4), means (78) for fixing at least one portion of the strap (5; 105; 205) to the rigid part and means (11, 12, 13) for tightening the strap (5; 105; 205), **characterized in that** the bearing points (6; 106) are independent and carried by the rigid part, and **in that** the portion of the strap (5; 105; 205) is fixed directly to the rigid part.

2. Device for fixing a catalytic converter according to Claim 1, **characterized in that** the fixing point of the portion of the strap (5) is positioned in said axial plane between the bearing points (6).

3. Device for fixing a catalytic converter according to Claim 2, **characterized in that** it has at least two axially offset straps (5), the fixing point of the portion of each strap (5) being positioned in said axial plane between a pair of bearing points (6), each pair of bearing points (6) being located in the plane of the corresponding strap (5).

4. Device for fixing a catalytic converter according to any one of Claims 1 to 3, **characterized in that** the bearing points (6) are made in one piece with the rigid part.

5. Device for fixing a catalytic converter according to Claim 1, **characterized in that** a bearing point (106) has a bearing support (108) fixed at the same point of the rigid part.

6. Device for fixing a catalytic converter according to Claim 5, **characterized in that** the portion of the strap (105, 205) and the bearing support (108; 208) are fixed at the same point of the rigid part.

7. Device for fixing a catalytic converter according to Claim 6, **characterized in that** each bearing point (106) has a bearing support (108; 208) fixed to the rigid part.

8. Fixing device according to Claim 5, 6 or 7, **characterized in that** it has two axially offset straps (205) whose end portions are fixed to the rigid part, and **in that** it has a bearing support (208) extending longitudinally between two fixing points (204) of the straps (205).

9. Fixing device according to any one of Claims 5 to 8, **characterized in that** each bearing support (108; 208) is composed of a bent sheet metal lug having a radial branch (118; 218) and a tangential branch (119; 219) interposed between the free end (118a) of the radial branch (118; 218) and the facing portion of the outer surface of the catalytic converter (4).

10. Fixing device according to any one of Claims 5 to 9, **characterized in that** the bearing points (106) are made in one piece with the rigid part.

## Patentansprüche

1. Vorrichtung zur Befestigung eines Katalysators (4) von im Wesentlichen zylindrischer Form auf einem steifen Teil eines Verbrennungsmotors (1; 101; 201), wobei die Vorrichtung mindestens einen Spanngurt (5; 105; 205), der den Katalysator (4) umgibt und ihn auf dem steifen Teil mit Hilfe von mindestens einem Paar von Auflagepunkten (6; 106) hält, die V-förmig zu beiden Seiten einer axialen Ebene des Katalysators (4) angeordnet sind, Befestigungsmittel mindestens eines Abschnitts des Gurts (5; 105; 205) auf dem steifen Teil und Spannmittel (11, 12, 13) des Gurts (5; 105; 205) aufweist, **dadurch gekennzeichnet, dass** die Auflagepunkte (6; 106) unabhängig sind und vom steifen Teil getragen werden, und dass der Abschnitt des Gurts (5; 105; 205) direkt auf dem steifen Teil befestigt wird.

2. Befestigungsvorrichtung für einen Katalysator nach Anspruch 1, **dadurch gekennzeichnet, dass** der Befestigungspunkt des Abschnitts des Gurts (5) in der axialen Ebene zwischen den Auflagepunkten (6) angeordnet ist.

3. Befestigungsvorrichtung für einen Katalysator nach Anspruch 2, **dadurch gekennzeichnet, dass** sie mindestens zwei axial verschobene Gurte (5) aufweist, wobei der Befestigungspunkt des Abschnitts jedes Gurts (5) in der axialen Ebene zwischen einem Paar von Auflagepunkten (6) angeordnet ist, wobei jedes Paar von Auflagepunkten (6) sich in der Ebene des entsprechenden Gurts (5) befindet.

4. Befestigungsvorrichtung für einen Katalysator nach einem der Ansprüche 1 bis 3, **dadurch gekennzeichnet, dass** die Auflagepunkte (6) aus einem Stück mit dem steifen Teil hergestellt werden.

5. Befestigungsvorrichtung für einen Katalysator nach Anspruch 1, **dadurch gekennzeichnet, dass** ein Auflagepunkt (106) eine Lagerstütze (108) aufweist, die am gleichen Punkt des steifen Teils befestigt ist.

6. Befestigungsvorrichtung für einen Katalysator nach Anspruch 5, **dadurch gekennzeichnet, dass** der Abschnitt des Gurts (105, 205) und die Lagerstütze (108; 208) am gleichen Punkt des steifen Teils befestigt sind.

7. Befestigungsvorrichtung für einen Katalysator nach Anspruch 6, **dadurch gekennzeichnet, dass** jeder Auflagepunkt (106) eine Lagerstütze (108; 208) aufweist, die am steifen Teil befestigt ist.

8. Befestigungsvorrichtung nach Anspruch 5, 6 oder 7, **dadurch gekennzeichnet, dass** sie zwei axial verschobene Gurte (205) aufweist, von denen die Endabschnitte am steifen Teil befestigt sind, und dass sie eine Lagerstütze (208) aufweist, die sich in Längsrichtung zwischen zwei Befestigungspunkten (204) der Gurte (205) erstreckt.

9. Befestigungsvorrichtung nach einem der Ansprüche 5 bis 8, **dadurch gekennzeichnet, dass** jede Lagerstütze (108; 208) aus einer umgebogenen Blechklaue besteht, die einen radialen Zweig (118; 218) und einen tangentialen Zweig (119; 219) aufweist, der zwischen das freie Ende (118a) des radialen Zweigs (118; 218) und den gegenüberliegenden Abschnitt der Außenfläche des Katalysators (4) eingefügt ist.

10. Befestigungsvorrichtung nach einem der Ansprüche 5 bis 9, **dadurch gekennzeichnet, dass** die Auflagepunkte (106) aus einem Stück mit dem steifen Teil hergestellt werden.
